# FASCICULE DE BREVET EUROPEEN

(11) **EP 3 839 604 B1**
(45) Date de publication et mention de la délivrance du brevet: **10.08.2022**
(21) Numéro de dépôt: 20214465.5
(22) Date de dépôt: 16.12.2020
(51) Int. Cl.: G02B 26/10

(54) **DISPOSITIF DE SCAN À EXCENTRIQUE AMÉLIORÉ**
VERBESSERTE EXZENTRISCHE SCAN-VORRICHTUNG
IMPROVED OFF-CENTRE SCANNING DEVICE

(30) Priorité: 20.12.2019 FR 1915218
(43) Date de publication de la demande: 23.06.2021
(73) Titulaire: Centre National d'Études Spatiales, 75039 Paris Cedex 01 (FR)
(72) Inventeur: TREMOLIERES, Sylvain, 31570 Lanta (FR); DOUMAS, Nicolas, 31380 Azas (FR)
(74) Mandataire: Germain Maureau

(56) Documents cités:
- EP-A1- 3 531 184
- CN-U- 204 143 063
- US-A1- 2009 101 839

## Description

L'invention concerne le domaine des scans configurés pour entrainer en rotation un objet tel qu'un miroir, une caméra ou une antenne. Plus particulièrement, l'invention concerne le domaine des instruments optiques de l'industrie spatiale, visant à observer la surface de planètes ou de satellites.

Un dispositif de scan peut également être nommé dispositif de balayage. Le document CN204143036 divulgue un dispositif de balayage connu.

De manière générale, les dispositifs de scan, notamment à débattement angulaire limité, confèrent un mouvement d'oscillation angulaire à un objet, dont l'amplitude angulaire dépend de la géométrie du dispositif de scan. Le mouvement d'oscillation angulaire conféré par un dispositif de scan, peut être un mouvement continu, dit balayage, ou un mouvement pas à pas, dit position discrète.

Dans l'industrie spatiale, il est connu d'utiliser des dispositifs de scan optiques hautes précisions configurés pour permettre un changement d'optique soit en position discrète soit en balayage. De tels dispositifs comprennent généralement un actionneur du type moteur sans balaie (nommé moteur brushless en terminologie anglophone) relié à un miroir à une de ses extrémités, et un codeur optique du type capteur de position angulaire visant à asservir la position du miroir de façon à connaitre avec précision la position du miroir. On parle de système en boucle fermé.

Un inconvénient de ces dispositifs de scan est leur encombrement. Une solution connue afin de réduire l'encombrement est d'utiliser un actionneur rotatif à excentrique. De cette façon, l'axe de rotation du miroir est parallèle à l'axe de rotation de l'actionneur, l'actionneur se trouve déporté du miroir, ainsi l'encombrement est réduit.

L'invention a pour but de réduire encore l'encombrement des dispositifs de scan de l'art antérieur tout en conservant une grande précision de position de l'objet à orienter.

A cet effet, l'invention concerne un dispositif de scan, comprenant :
- Un objet à orienter, tel qu'un miroir,
- Un bras de levier comprenant une extrémité proximale solidaire de l'objet à orienter, et une extrémité distale pivotante,
- Un capteur de référence de position de l'objet à orienter,
- Un système à excentrique configuré pour conférer un mouvement d'oscillation angulaire à l'objet à orienter via l'extrémité distale pivotante du bras de levier, le système à excentrique comprenant un motoréducteur et un excentrique.

Par motoréducteur, on entend un actionneur comprenant un moteur pas à pas et un réducteur permettant de réduire la vitesse de rotation du moteur et d'augmenter le couple et la résolution de l'actionneur. Un pilotage à rattrapage de jeu, également nommé dépassement de consigne est avantageusement réalisé, et permet ainsi de maîtriser les incertitudes de positionnement angulaire en sortie réducteur.

Un pilotage à rattrapage de jeu est également nommé pilotage en compensation de jeu. Ainsi, le dispositif de scan de l'invention présente un encombrement réduit et permet une grande précision de positionnement de l'objet à orienter.

Le dispositif de scan selon l'invention permet une grande précision de positionnement de l'objet à orienter sans nécessite de codeur optique.

Le capteur de référence est un capteur de position. Le dispositif de scan fonctionne en boucle ouverte.

Selon d'autres caractéristiques de l'invention, le dispositif de scan de l'invention comporte l'une ou plusieurs des caractéristiques optionnelles suivantes, considérées seules ou selon toutes les combinaisons possibles.

Selon une caractéristique, le capteur de référence est un capteur à courant de foucault. Selon une autre caractéristique, le capteur de référence est un capteur mécanique tel qu'une butée mécanique.

Selon une caractéristique, le dispositif de scan comporte plusieurs capteurs de position. Selon une autre caractéristique, le capteur de référence est un unique capteur de position de l'objet à orienter. Ainsi, le dispositif de scan est simplifié et l'encombrement fortement réduit, tout en gardant une grande précision de positionnement de l'objet à orienter.

Selon une caractéristique, le motoréducteur est un cylindre présentant un axe de rotation central longitudinal et l'objet à orienter présente un axe de rotation parallèle à l'axe de rotation central longitudinal du motoréducteur.

Selon une caractéristique, l'excentrique est un cylindre disposé à une extrémité longitudinale du motoréducteur. L'excentrique présente un axe central longitudinal parallèle à l'axe de rotation central longitudinal du motoréducteur. L'axe central longitudinal de l'excentrique est déporté de l'axe de rotation central longitudinal du motoréducteur. La distance entre l'axe de rotation central longitudinal du motoréducteur et l'axe central longitudinal de l'excentrique est appelée entraxe. L'axe de rotation central longitudinal du motoréducteur est solidaire de l'excentrique. Ainsi, le motoréducteur permet d'entrainer l'excentrique selon un mouvement asymétrique.

L'excentrique est un cylindre percé à côté de son axe central longitudinal par l'axe de rotation central longitudinal du motoréducteur.

Le motoréducteur permet d'entrainer l'excentrique selon un mouvement asymétrique.

Selon une caractéristique, le dispositif de scan comprend un support pour l'objet à orienter, le capteur de référence et le système à excentrique.

Selon cette caractéristique, l'objet à orienter est en liaison pivot avec le support.

Selon une caractéristique, le dispositif de scan comprend un ressort de pré-charge configuré pour maintenir le bras de levier au contact de l'excentrique au cours du mouvement d'oscillation. Ainsi, le dispositif de scan présente un jeu uniquement au niveau du motoréducteur et plus particulièrement du réducteur, ce jeu pouvant être supprimé grâce à un pilotage à rattrapage de jeu.

Selon cette caractéristique, le ressort de pré-charge présente une première extrémité reliée à l'objet à orienter et une deuxième extrémité opposée reliée au support.

Selon une caractéristique, le dispositif de scan comprend un moyen de blocage tel qu'une butée configuré pour maintenir le bras de levier à distance de l'excentrique lorsque l'objet à orienter est dans une position d'amplitude maximale. Ainsi, en position d'amplitude maximale, la dégradation du dispositif de scan, au niveau du système à excentrique, est limitée lorsque l'objet à orienter est dans une position d'amplitude maximale, notamment lors d'une phase de lancement d'un lanceur de l'industrie spatiale comprenant le dispositif de scan tel que décrit précédemment.

Selon cette caractéristique, le moyen de blocage est disposé sur le support.

Selon une caractéristique, l'excentrique est en contact par glissement avec l'extrémité distale pivotante du bras de levier.

Selon cette caractéristique, l'excentrique comprend un revêtement lubrifiant au niveau du contact avec l'extrémité distale pivotante du bras de levier.

Selon une autre caractéristique, l'excentrique est en contact par roulement avec l'extrémité distale pivotante du bras de levier. Ainsi, la durée de vie du dispositif de scan est améliorée.

Selon cette caractéristique, l'excentrique comprend un roulement au niveau du contact avec l'extrémité distale pivotante du bras de levier.

L'invention se rapporte également à un procédé de commande d'un dispositif de scan tel que décrit précédemment, par pilotage en compensation de jeu.

D'autres caractéristiques et avantages de la présente invention apparaîtrons à la lecture de la description qui va suivre et à l'examen des figures annexées dans lesquelles :
[Fig. 1A] est une vue schématique en perspective partielle d'un dispositif de scan selon un exemple de réalisation de l'invention,
[Fig. 1B] est une vue schématique en perspective partielle d'un dispositif de scan selon un autre exemple de réalisation de l'invention,
[Fig. 2] est une vue schématique du fonctionnement du dispositif de scan de la figure 1B,
[Fig. 3] est une autre vue schématique du fonctionnement du dispositif de scan de la figure 1B,
[Fig. 4] est une vue schématique d'un dispositif de scan selon un autre exemple de réalisation de l'invention.

Dans description qui va suivre et dans les revendications, des composants identiques, similaires ou analogues seront désignés par les mêmes chiffres de référence.

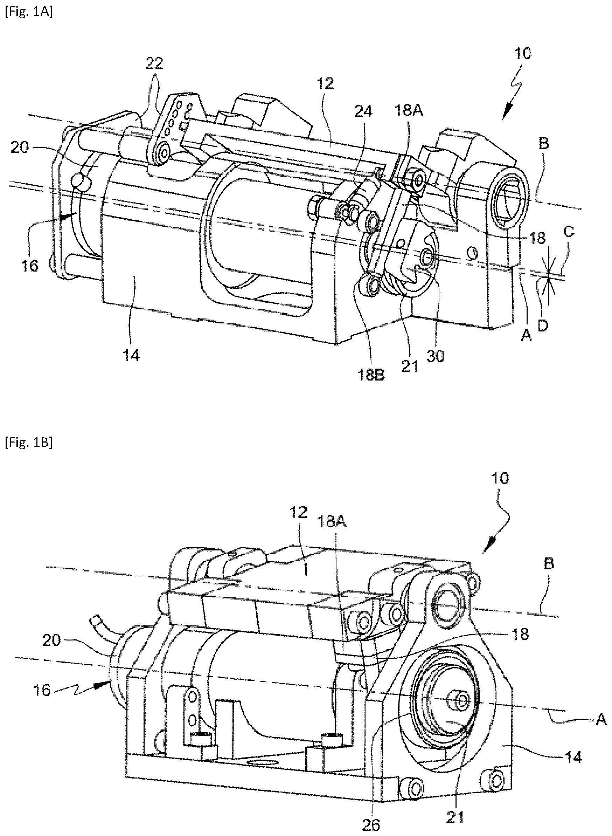

Les figures 1A et 1B représentent un dispositif de scan 10 selon un exemple de réalisation. Dans cet exemple, le dispositif de scan 10 comporte un miroir 12 en liaison pivot avec un support 14. Le miroir 12 est un objet à orienter du dispositif de scan 10. Dans d'autres exemples non représentés, le miroir pourrait être tout autre objet à orienter, tel qu'une antenne ou une caméra par exemple.

Le dispositif de scan 10 comporte également un système à excentrique 16 configuré pour conférer un mouvement d'oscillation angulaire au miroir 12. A cet effet, dans cet exemple de réalisation, le miroir 12 comprend un bras de levier 18 comprenant une extrémité proximale 18A solidaire du miroir 12, et une extrémité distale 18B pivotante configurée pour être en contact avec le système à excentrique 16.

Le système à excentrique 16 comprend un motoréducteur 20 et un excentrique 21. Le motoréducteur 20 permet d'actionner la rotation de l'excentrique 21 permettant de conférer un mouvement d'oscillation angulaire au miroir 12.

Comme le montre la figure 1A, l'extrémité distale 18B pivotante du bras de levier 18 est configurée pour être en contact avec l'excentrique 21, de sorte à permettre de conférer un mouvement d'oscillation angulaire au miroir 12.

Dans le mode de réalisation de la figure 1A, le système à excentrique 16, et plus particulièrement l'excentrique 21, peut présenter un revêtement lubrifiant. De cette façon, le contact entre l'excentrique 21 et le bras de levier 18 est un contact par glissement facilité par le lubrifiant qui limite les frottements. La durée de vie du dispositif de scan 10 est améliorée.

Dans le mode de réalisation de la figure 1B, le système à excentrique 16 peut comporter un roulement 26 autour de l'excentrique 21. Le roulement 26 est entraîné en rotation par le moteur 20 via l'excentrique 21. Le roulement 26, dans cet exemple, enveloppe l'excentrique 21. Ainsi, dans cet exemple de réalisation, l'extrémité distale 18B pivotante du bras de levier 18 est configurée pour être en contact avec le roulement 26, de sorte à permettre de conférer un mouvement d'oscillation angulaire au miroir 12. La durée de vie du dispositif de scan 10 est encore améliorée.

Le dispositif de scan 10 comporte en outre un capteur de référence 22 (non représenté sur la figure 1B) de position du miroir 12. On parle de système en boucle ouverte. Le capteur de référence peut être par exemple un capteur à courant de foucault, un capteur magnétique, un capteur à effet hall, un capteur dit microswitch, un capteur optique ou un capteur mécanique tel qu'une butée mécanique.

Dans l'exemple représenté, le dispositif de scan 10 comporte plusieurs capteurs de référence 22, par exemple deux capteurs dont l'un est grossier et l'autre fin. Une telle combinaison de capteurs permet d'obtenir une précision meilleure que la précision de chaque capteur séparé, qui sont miniatures.

Dans l'exemple des figures 1A et 1B, le support 14 est configuré pour supporter le miroir 12, le capteur de référence 22 et le système à excentrique 16.

Le motoréducteur 20 peut présenter une forme de cylindre présentant un axe de rotation central longitudinal A. Le miroir quant à lui peut présenter un axe de rotation B parallèle à l'axe de rotation central longitudinal A du motoréducteur 20. L'excentrique 21 présente un axe central longitudinal C déporté de l'axe de rotation central longitudinal A du motoréducteur 20. Ainsi, l'excentrique 21 comprend un axe central longitudinal C excentré. La distance D entre l'axe de rotation central longitudinal A du motoréducteur 20 et l'axe central longitudinal C de l'excentrique 21 est de l'ordre de 3 mm. Cette distance D est nommée entraxe. Cette distance D est variable et permet de jouer sur l'amplitude angulaire.

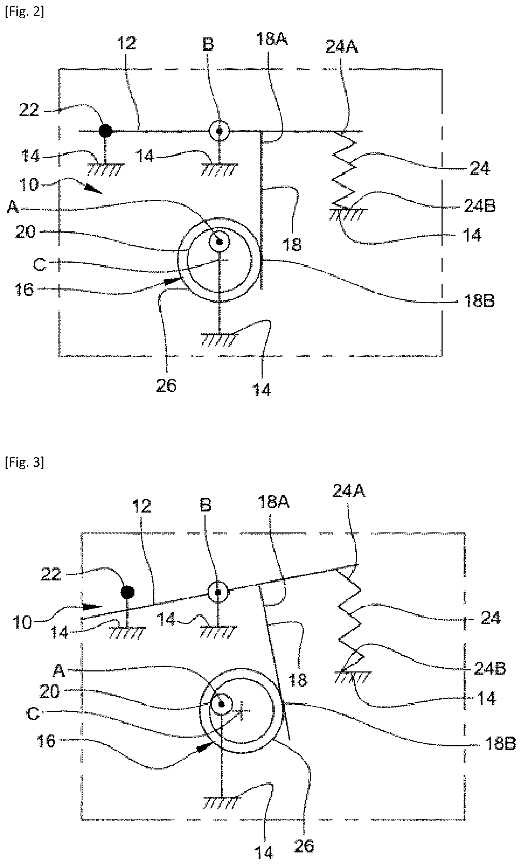

L'excentrique 21 peut être disposé à une extrémité longitudinale du motoréducteur 20. Dans l'exemple des figures 1A et 1B, le dispositif de scan 10 comprend un ressort de pré-charge 24 configuré pour maintenir le bras de levier 18 au contact de l'excentrique 21 au cours du mouvement d'oscillation. Le ressort de pré-charge 24 présente par exemple une première extrémité 24A (figure 2) reliée au miroir 12 et une deuxième extrémité 24B (figure 2) opposée reliée au support 14.

En outre, comme le montre la figure 1A, l'excentrique 21 peut comporter une masse d'équilibrage 30.

Les figures 2 et 3 illustrent le fonctionnement du dispositif de scan 10 selon un exemple de réalisation de l'invention.

Le motoréducteur 20 est un actionneur rotatif. Il entraine en rotation l'excentrique 21, autour de l'axe de rotation central longitudinal A du motoréducteur 20. La rotation de l'excentrique 21 entraine un pivotement du bras de levier 18, ce qui entraine un mouvement d'oscillation angulaire du miroir 12. Ainsi, le motoréducteur 20 entraine l'excentrique 21 qui entraine le bras de levier 18 et génère une rotation du miroir 12. Le ressort de pré-charge 24 quant à lui permet d'exercer une force de rappel sur le miroir 12, afin de maintenir le bras de levier au contact de l'excentrique 21 au cours du mouvement d'oscillation du miroir 12.

Dans l'exemple des figures 2 et 3, le système à excentrique 16 comprend un roulement 26. Ainsi, le motoréducteur 20 entraine l'excentrique 21 qui entraine le roulement 26 qui entraine le bras de levier 18 et génère une rotation du miroir 12.

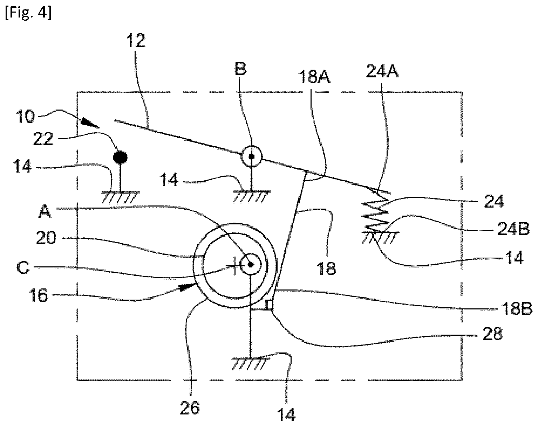

Dans l'exemple de la figure 4, le dispositif de scan 10 comprend un moyen de blocage 28 tel qu'une butée configuré pour maintenir le bras de levier 18 à distance de l'excentrique 21 lorsque le miroir 12 est dans une position d'amplitude maximale. En effet, lorsque le dispositif de scan 10 est destiné à être intégré dans un lanceur de l'industrie spatiale, la position d'amplitude maximale, générée par le ressort de pré-charge 24, correspond à une position de repos dans laquelle le dispositif de scan 10 est lors du lancement. Au cours du lancement, le dispositif de scan 10 est soumis à de nombreuses secousses et il est préférable de ne pas avoir de contact entre le bras de levier 18 et l'excentrique 21 afin de ne pas endommage l'excentrique 21.

Le dispositif de scan 10 tel qu'illustré aux figures 1 à 4 est commandé par pilotage en compensation de jeu. Un tel pilotage est réalisé par dépassement d'une consigne donnée puis retour en arrière pour arriver à la consigne donnée. Un tel pilotage permet une grande précision de position du miroir.

Le motoréducteur est un moteur pas à pas associé à un réducteur.

## Revendications

1. Dispositif de scan (10), comprenant :
- Un objet (12) à orienter, tel qu'un miroir,
- Un bras de levier (18) comprenant une extrémité proximale (18A) solidaire de l'objet à orienter, et une extrémité distale (18B) pivotante,
- Un capteur de référence (22) de position de l'objet à orienter,
- Un système à excentrique (16) configuré pour conférer un mouvement d'oscillation angulaire à l'objet à orienter via l'extrémité distale pivotante du bras de levier, le système à excentrique comprenant un motoréducteur (20) et un excentrique (21).

2. Dispositif de scan selon la revendication 1, dans lequel le capteur de référence est un capteur à courant de foucault.

3. Dispositif de scan selon l'une quelconque des revendications précédentes, dans lequel le capteur de référence est un unique capteur de position de l'objet à orienter.

4. Dispositif de scan selon l'une quelconque des revendications précédentes, dans lequel le motoréducteur est un cylindre présentant un axe de rotation central longitudinal (A) et l'objet à orienter présente un axe de rotation (B) parallèle à l'axe de rotation central longitudinal du motoréducteur.

5. Dispositif de scan selon l'une quelconque des revendications précédentes, dans lequel l'excentrique est un cylindre disposé à une extrémité longitudinale du motoréducteur.

6. Dispositif de scan selon l'une quelconque des revendications précédentes, dans lequel l'excentrique présente un axe central longitudinal (C) parallèle à l'axe de rotation central longitudinal du motoréducteur et déporté de l'axe de rotation central longitudinal du motoréducteur.

7. Dispositif de scan selon l'une quelconque des revendications précédentes, comprenant un support (14) pour l'objet à orienter, le capteur de référence et le système à excentrique.

8. Dispositif de scan selon la revendication précédente, comprenant un ressort de pré-charge (24) configuré pour maintenir le bras de levier au contact de l'excentrique au cours du mouvement d'oscillation.

9. Dispositif de scan selon l'une quelconque des revendications précédentes, comprenant un moyen de blocage (28) tel qu'une butée, configuré pour maintenir le bras de levier à distance de l'excentrique lorsque l'objet à orienter est dans une position d'amplitude maximale.

10. Dispositif de scan selon l'une quelconque des revendications précédentes, dans lequel l'excentrique est en contact par glissement avec l'extrémité distale pivotante du bras de levier, l'excentrique comprenant de préférence un revêtement lubrifiant au niveau du contact avec l'extrémité distale pivotante du bras de levier.

11. Dispositif de scan selon l'une quelconque des revendications 1 à 8, dans lequel l'excentrique est en contact par roulement avec l'extrémité distale pivotante du bras de levier, l'excentrique comprenant de préférence un roulement (26) au niveau du contact avec l'extrémité distale pivotante du bras de levier.

12. Procédé de commande d'un dispositif de scan selon l'une quelconque des revendications précédentes, par pilotage en compensation de jeu.

## Patentansprüche

1. Scan-Vorrichtung (10), umfassend:
- einen auszurichtenden Gegenstand (12), wie z. B. einen Spiegel,
- einen Hebelarm (18), umfassend ein proximales Ende (18A), das fest mit dem auszurichtenden Gegenstand verbunden ist, und ein schwenkendes distales Ende (18B),
- einen Positions-Referenzsensor (22) des auszurichtenden Gegenstands,
- ein exzentrisches System (16), das konfiguriert ist, um dem auszurichtenden Gegenstand eine Winkel-Schwingungsbewegung über das schwenkende distale Ende des Hebelarms zu verleihen, wobei das exzentrische System einen Getriebemotor (20) und einen Exzenter (21) umfasst.

2. Scan-Vorrichtung nach Anspruch 1, wobei der Referenzsensor ein Wirbelstromsensor ist.

3. Scan-Vorrichtung nach einem der vorhergehenden Ansprüche, wobei der Referenzsensor ein einziger Positionssensor des auszurichtenden Gegenstands ist.

4. Scan-Vorrichtung nach einem der vorhergehenden Ansprüche, wobei der Getriebemotor ein Zylinder ist, der eine zentrale Längsdrehachse (A) aufweist und der auszurichtende Gegenstand eine Drehachse (B) parallel zur zentralen Längsdrehachse des Getriebemotors aufweist.

5. Scan-Vorrichtung nach einem der vorhergehenden Ansprüche, wobei der Exzenter ein Zylinder ist, der an einem Längsende des Getriebemotors angeordnet ist.

6. Scan-Vorrichtung nach einem der vorhergehenden Ansprüche, wobei der Exzenter eine zentrale Längsachse (C) parallel zur zentralen Längsdrehachse des Getriebemotors und versetzt zur zentralen Längsdrehachse des Getriebemotors aufweist.

7. Scan-Vorrichtung nach einem der vorhergehenden Ansprüche, umfassend eine Stütze (14) für den auszurichtenden Gegenstand, den Referenzsensor und das exzentrische System.

8. Scan-Vorrichtung nach vorhergehenden Anspruch, umfassend eine Vorspannfeder (24), die konfiguriert ist, um den Hebelarm während der Schwingungsbewegung in Kontakt mit dem Exzenter zu halten.

9. Scan-Vorrichtung nach einem der vorhergehenden Ansprüche, umfassend ein Blockiermittel (28) wie z. B. einen Anschlag, der konfiguriert ist, um den Hebelarm in einem Abstand vom Exzenter zu halten, wenn der auszurichtende Gegenstand in einer maximalen Amplitudenposition ist.

10. Scan-Vorrichtung nach einem der vorhergehenden Ansprüche, wobei der Exzenter in gleitendem Kontakt mit dem schwenkenden distalen Ende des Hebelarms ist, wobei der Exzenter vorzugsweise eine Schmierschicht auf der Ebene des Kontakts mit dem schwenkenden distalen Ende des Hebelarms umfasst.

11. Scan-Vorrichtung nach einem der Ansprüche 1 bis 8, wobei der Exzenter in rollendem Kontakt mit dem schwenkenden distalen Ende des Hebelarms ist, wobei der Exzenter vorzugsweise ein Lager (26) auf der Ebene des Kontakts mit dem schwenkenden distalen Ende des Hebelarms umfasst.

12. Verfahren zur Steuerung einer Scan-Vorrichtung nach einem der vorhergehenden Ansprüche durch Spielausgleichsführung.

## Claims

1. A scanning device (10), comprising:
- an object (12) to be oriented, such as a mirror,
- a lever arm (18) comprising a proximal end (18A) secured to the object to be oriented, and a pivoting distal end (18B),
- a reference sensor (22) of the position of the object to be oriented,
- an eccentric system (16) configured to impart an angular oscillating movement to the object to be oriented via the pivoting distal end of the lever arm, the eccentric system comprising a gear motor (20) and an eccentric (21).

2. The scanning device according to claim 1, wherein the reference sensor is an eddy current sensor.

3. The scanning device according to any one of the preceding claims, wherein the reference sensor is a single sensor of the position of the object to be oriented.

4. The scanning device according to any one of the preceding claims, wherein the gear motor is a cylinder having a longitudinal central axis of rotation (A) and the object to be oriented has an axis of rotation (B) parallel to the longitudinal central axis of rotation of the gear motor.

5. The scanning device according to any one of the preceding claims, wherein the eccentric is a cylinder disposed at a longitudinal end of the gear motor.

6. The scanning device according to any one of the preceding claims, wherein the eccentric has a longitudinal central axis (C) parallel to the longitudinal central axis of rotation of the gear motor and offset from the longitudinal central axis of rotation of the gear motor.

7. The scanning device according to any one of the preceding claims, comprising a support (14) for the object to be oriented, the reference sensor and the eccentric system.

8. The scanning device according to the preceding claim, comprising a preload spring (24) configured to keep the lever arm in contact with the eccentric during the oscillating movement.

9. The scanning device according to any one of the preceding claims, comprising a blocking means (28) such as a stop, configured to keep the lever arm at a distance from the eccentric when the object to be oriented is in a maximum amplitude position.

10. The scanning device according to any one of the preceding claims, wherein the eccentric is in sliding contact with the pivoting distal end of the lever arm, the eccentric preferably comprising a lubricating coating at the level of the contact with the pivoting distal end of the lever arm.

11. The scanning device according to any one of claims 1 to 8, wherein the eccentric is in rolling contact with the pivoting distal end of the lever arm, the eccentric preferably comprising a bearing (26) at the level of the contact with the pivoting distal end of the lever arm.

12. A method of controlling a scanning device according to any one of the preceding claims, by clearance compensation driving.
